# EUROPEAN PATENT SPECIFICATION

(11) **EP 1 951 566 B1**
(45) Date of publication and mention of the grant of the patent: **16.03.2011**
(21) Application number: 06804553.3
(22) Date of filing: 21.11.2006
(51) Int. Cl.: B62D 55/26, B62D 55/28, B62D 55/20, B62D 55/32

(54) **TRACK CHAIN ASSEMBLY**
RAUPENKETTENANORDNUNG
ENSEMBLE CHAINE A CHENILLE

(30) Priority: 21.11.2005 AU 2005906442
(43) Date of publication of application: 06.08.2008
(73) Proprietor: Norrish, Ronald Francis, Dianella WA 6059 (AU); Hanks, Brian David, Eden Hill WA 6054 (AU)
(72) Inventor: Norrish, Ronald Francis, Dianella WA 6059 (AU); Hanks, Brian David, Eden Hill WA 6054 (AU)
(74) Representative: Modiano, Micaela Nadia
(86) International application number: PCT/AU2006/001758
(87) International publication number: WO 2007/056831

(56) References cited:
- EP-A- 0 091 816
- EP-A1- 0 654 398
- EP-A2- 1 253 070
- JP-A- 2004 058 688
- US-A- 1 588 549
- US-A- 2 869 932
- US-A- 3 897 980
- US-A- 4 123 119

## Description

### Field of the Invention

The present invention relates to a track chain assembly, in particular to a track chain assembly for an undercarriage of a track-type vehicle, such as for example, earth moving equipment and mobile cranes.

### Background of the Invention

Track-type vehicles have an undercarriage configured for moving the vehicle along the ground. The undercarriage includes a track chain assembly encircling a frame, a sprocket, rollers and an idler. Track chain assemblies generally include a pair of parallel chains, with each parallel chain being made up of a series of interconnected track links.

Each track link is typically provided with a track plate (also known as a track shoe) for assisting the manoeuverability of the track-type vehicle. The characteristics and design of the track plate will vary according to, and be selected to suit, the surface conditions on which the track-type vehicle is intended to operate. For example, an underside of the track plate can be provided with one or more grouser bars in varying configurations to provide the track-type vehicle with a desired degree of traction on a soft and/or boggy surface or a hard, rocky surface. US-A-4123119 describes an endless track assembly, which has a plurality of track shoes which arc pivotally interconnected by a link assembly secured thereto. The link assembly includes a plurality of links with each track shoe having a base plate disposed on each pair of the links and which are releasably secured to each pair of laterally spaced links by bolts.

US-A-1588549 discloses a track link according to the preamble of claim 1.

Because track-type machines work in many different conditions, track plates are a major wear item. In particular, if one or more grouser bars snap off or is worn down during use, the track plate will need to be replaced or at least repaired.

Typically, the track plate is fixed to the track link with bolts which are also manufactured from hard, high quality, high strength materials. Over the life time of the track plate, the bolt heads frequently become worn down to a nub and removal of the track plate from the track link can become very time-consuming, as the track plate may need to be cut from the track link because the bolts are no longer able to be readily removed.

Thus the removal of the track plate from the track link further increases the down time required to service track chain assemblies and/or repair to replace one or more track plates. Typically, the track chain assembly must be disassembled from the undercarriage and moved to a specially equipped repair shop which is located off-site for repair, then transported back to the track-type vehicle, and reinstalled. This process may take days and is very labour intensive, with costs approximately proportioned as 10% for parts and 90% for labour, excluding down time for lost use of the vehicle.

### Summary of the Invention

In the invention there is provided the track link of claim 1 and the track chain assembly of claim 14.

### Brief Description of the Drawings

Preferred embodiments, incorporating all aspects of the invention, will now be described by way of example only with reference to the accompanying drawings, in which:
Figure 1 is a side view of a track assembly in accordance with the present invention with a removable track plate shown secured to a track chain link;

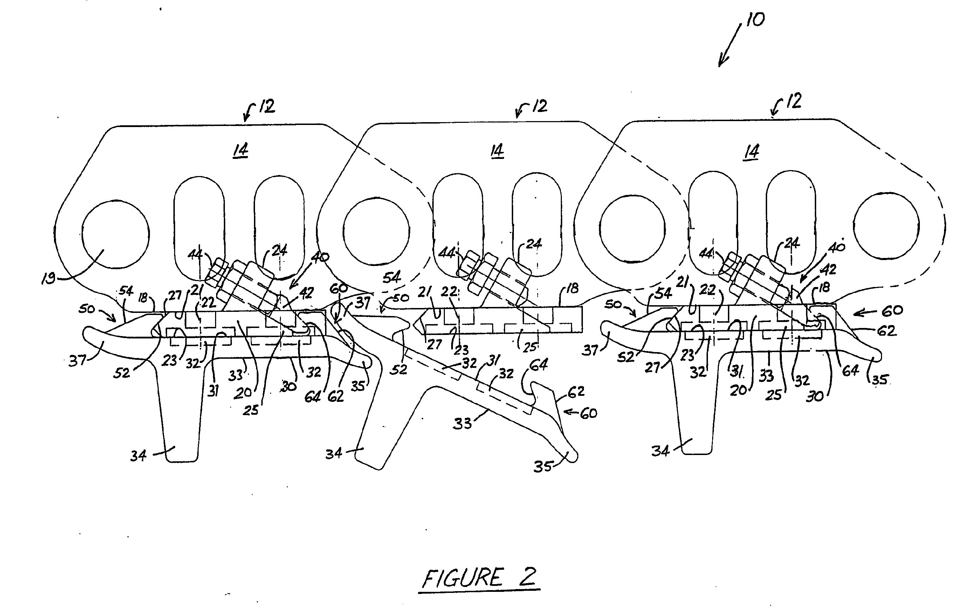

Figure 2 is a side view of the track assembly shown in Figure 1 with the removable track plate shown unsecured and removed from the track chain link;
Figure 3 is a plan view of the track assembly of Figure 1; and,

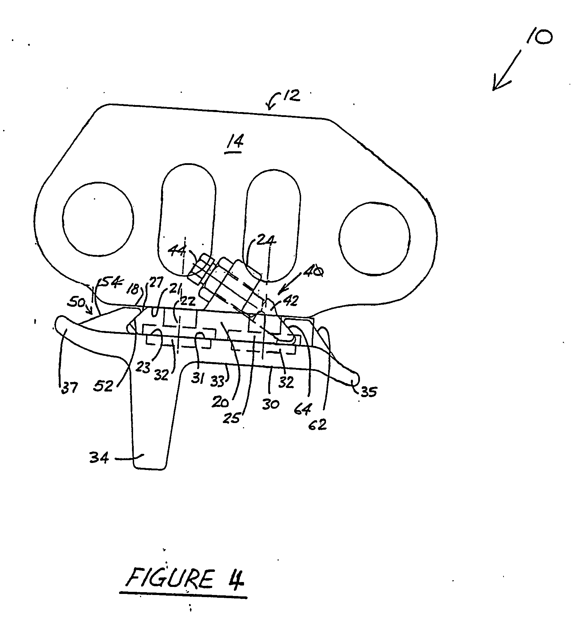

Figure 4 is a side view of a track link in accordance with the present invention.

### Detailed Description of the Preferred Embodiments of the Invention

Referring to the accompanying figures where like numerals refer to like features, there is provided a track chain assembly 10 for an undercarriage of a track-type vehicle.

The track chain assembly 10 includes a pair of parallel chains, with each parallel chain comprising a plurality of track links 12 interconnected in an endless loop. For example, in respect of a D10 Caterpillar^{™}, there are 44 track links 12 in each parallel chain of a track chain assembly. Each track link 12 is provided with a mounting portion 20, a track plate 30, and a pair of fastening device 40 for securing the track plate 30 to the mounting portion 20.

The track link 12 comprises a pair of side members 14, each side member 14 having a forward portion 11 and a rearward portion 13 interconnected by an intermediate portion 15. The forward and rearward portions 11, 13 are longitudinally aligned with a direction of travel of the undercarriage, and respective forward portions 11 and rearward portions 13 of a pair of side members 14 are in transverse parallel alignment with one another.

The rearward portions 13 of the track link 12 are spaced further apart than the forward portions 11, a spacing between the rearward portions 13 being sufficiently large enough for the forward portions 11 of an adjacent track link 12 to nest within the spacing.

The side members 14 are interconnected by a hollow cylindrical member 17 extending between the forward portions 11 of the side members 14. Each rearward portion 13 is provided with a circular aperture 19. Typically, the circular aperture 19 is configured to be aligned with the hollow cylindrical member 17 of an adjacent track link 12.

The hollow cylindrical member 17 of the forward portions 11 is adapted to receive a pin (not shown). In use, the pin is received in a bore of the hollow cylindrical member 17 and the circular apertures of the rearward portion 13 of an adjacent track link so as to link the forward portion 11 of the track link 12 to the rearward portion 13 of the adjacent track link 12.

In the embodiment shown in the figures, the mounting portion 20 comprises a plate having an upper surface 21 fixed to a ground engaging side 18 of the track link 12 with a plurality of bolts 22, a lower surface 23 adapted to be disposed contiguously with the track plate 30, a leading side 25, a rearward side 27, and two parallel opposing sides 29 spaced wider than the rear portions 13 of the track link 12 such that the mounting portion 20 spans and overlaps the side members 14 of the track link 12.

The bolts 22 are directed through the mounting portion 20 into the ground engaging side 18 of the track link 12, preferably into the ground engaging side 18 of the intermediate portions 15 of the side members 14. The bolts 22 are preferably made from high tensile steel or other metal alloys with similar strength properties. Typically, the bolts 22 are fixed to the mounting portion 20 and the track link 12 at about 1180,1-1843,91 Nm (1600-2500 foot pounds) of Torque.

The lower surface 23 of the mounting portion 20 is disposed contiguously with the track plate 30, the arrangement being such that the bolts 22 and their respective bolt heads 22a are received in a plurality of recesses 32 in the track plate 30. The plurality of recesses 32 are configured in a pattern to receive correspondingly aligned bolt heads 22a protruding from the lower surface 23 of the mounting portion 20. Thus, the bolt heads 22a are not exposed to wear normally associated with ground engagement over a particular period. Advantageously, since the bolts and the bolt heads 22a are not exposed to wear, it is anticipated that they will not have to be replaced as frequently as is the case in the prior art, thus providing a capital expenditure saving and a labour cost saving over the operative life of the track chain assembly 10.

Typically, the mounting portion 20 is 20 - 50 mm thick depending on the relative size of the undercarriage for which it is employed. It is envisaged, for example, that for a D10 Caterpillar^{™} the mounting portion 20 will be about 25 mm thick. The mounting portion 20 is typically mild steel plate or treaded plate, but may also be cast and formed from high tensile steel or other metal alloys with similar strength properties, and may require further heat treatment to improve the strength properties of the mounting portion 20.

In the example described in the figures, the leading side 25 of the mounting portion 20 is disposed at a forwardly inclined angle of 30°, and the rearward side 27 of the mounting portion 20 is disposed at a rearwardly inclined angle of about 45°, although it will be appreciated that as an artefact of the casting process, the respective lower portions of the leading and rearward sides 25, 27 may be chamfered at other opposingly inclined undefined angle.

The upper surface 21 of the mounting portion 20 is provided with a pair of upright lugs 24. Each lug 24 is disposed on respective opposing sides 29 of the mounting portion 20 adjacent to the leading side 25. The lugs 24 may be cast so as to be integrally formed with the mounting portion 20, or they may be retrospectively welded to the upper surface 21 of the mounting portion 20.

The lugs 24 are provided with a threaded bore, the configuration of the threaded bore being disposed at a downwardly inclined angle, being typically° in longitudinal alignment with the leading side 25 of the mounting portion 20.

The track plate 30 comprises a substantially flat plate having an upper surface 31 disposed contiguously with the mounting portion 20, a ground engaging surface 33, a leading side 35, a rearward side 37, and two parallel opposing sides 39.

The width of the track plate 30 is typically 600 mm - 900 mm depending on the surface conditions on which the undercarriage has to operate. For example, a wider track plate 30 will generally be used if the surface conditions are sandy or muddy.

Typically the track plate 30 is 16 - 30 mm thick depending on the relative size of the undercarriage for which it is employed. For example, for a D10 Caterpillar^{™} the track plate 30 will be about 20 mm thick. The track plate 30 is typically cast and formed from hard-wearing steel or suitable metal alloys and heat-treated to about 400 Brinell Hardness or greater.

The ground engaging surface 33 of the track plate 30 is provided with one or more downwardly depending grouser bars 34 of about 90-100 mm in height. It will be appreciated that the number and arrangement of grouser bars 34 depending from the ground engaging surface 33 of the track plate 30 can vary according to the surface conditions on which the undercarriage is operating, and will be selected according to criteria well understood by persons skilled in the art. In the embodiment shown in the figures, the ground engaging surface 33 of the track plate 30 is provided with a single grouser bar 34 disposed substantially in vertical alignment with the rearward side 27 of the mounting portion 20.

The leading side 35 of the track plate 30 is downwardly inclined while the rearward side 37 of the track plate 30 is upwardly inclined, each side 35, 37 respectively inclined with a small degree of curvature. The arrangement as described and shown in the figures is well known in the art and serves to facilitate a small degree of overlap between the leading side 35 of the track plate 30 and the rearward side 37 of the adjacent track plate 30.

The upper surface 31 of the track plate 30 is provided with a first flange 50 disposed adjacent to and extending in parallel alignment along the rearward side 37 of the track plate 30.

The first flange 50 is generally forwardly inclined and has an inclined forward facing surface 52 and an inclined rearward facing surface 54. The height of the first flange 50 is less than the thickness of the mounting portion 20, such that in use, the first flange 50 is received in a gap between the upper surface 31 of the track plate 30 and the ground engaging side 18 of the track link 12.

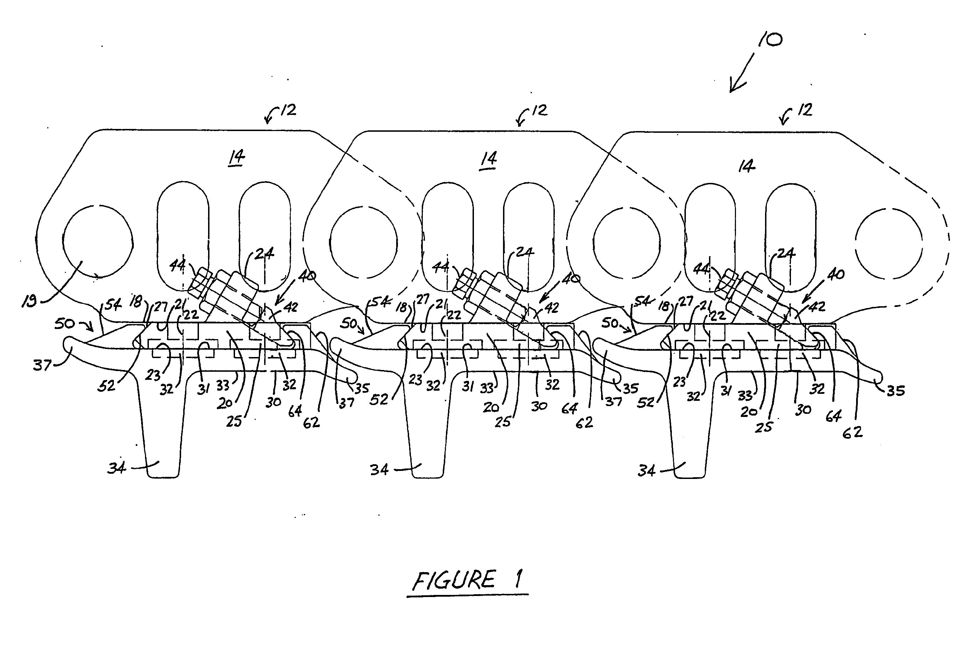

In the example shown in the figures, the forward facing surface 52 is disposed at an angle of about 45°. Typically, the angle of inclination of the forward facing surface 52 and the angle of inclination of the rearward side 27 of the mounting portion 20 are complementary angles because, in use, the forward facing surface 52 of the first flange 50 is configured to be contiguously disposed against the rearward side 27 of the mounting portion 20. However, while it is preferable that these angles are complementary, the angles may vary provided that the forward facing surface 52 can mate with the rearward side 27. In use, the purpose of the first flange 50 is to receivably engage the rearward side 27 of the mounting portion 20, as shown in Figure 1.

In the embodiment shown,in the figures, the rearward facing surface 54 of the first flange 50 is also disposed at a upwardly inclined angle of about 45°. While this angle is not critical to the performance of the invention, it is more advantageous for the angle of inclination of the rearward facing surface 54 to be substantially similar to the angle of inclination of the forward facing surface 52 to ensure that the first flange 50 has at least a substantially similar thickness throughout its height and thus is not structurally weak at its base adjacent the upper surface 31 of the track plate 30.

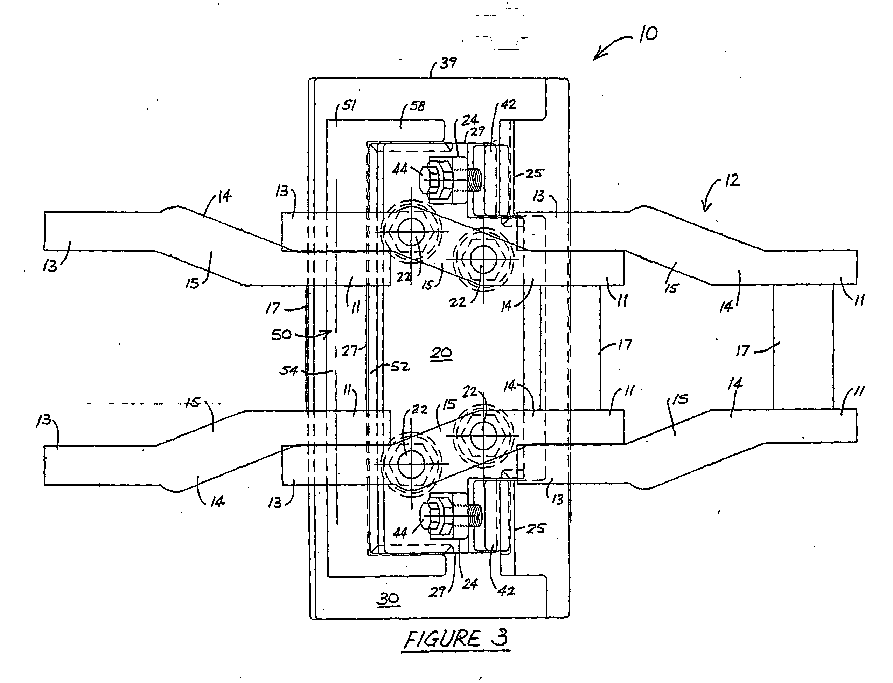

In the embodiment shown in Figure 3, opposing sides 51 of the first flange 50 are provided with forwardly extending rebate members 58. The rebate members 58 are spaced apart at a distance marginally greater than the width of the mounting portion 20, such that in use, the rebate members 58 are disposed adjacent to opposing sides 29 of the mounting portion 20. The purpose of the rebate members 58 is to guard against excessive lateral movement of the track plate 30.

The upper surface 31 of the track plate 30 is also provided with a pair of second flanges 60 disposed adjacent to respective opposing sides 39 of the track plate 30 and the forward side 35 of the track plate 30.

The second flanges 60 are generally rearwardly inclined and each flange 60 has an inclined forward facing surface 62 and an inclined rearward facing surface 64. The height of the second flange 60 is substantially the same height, or of similar height, as the first flange 50 for the reasons outlined previously with regard to the first flange 50.

The rearward facing surface 64 is disposed at an angle of about 45°. The forward facing surface 62 of the first flange 50 is also disposed at an angle of about 45°. While this angle is not critical to the performance of the invention, it is more advantageous for the angle of inclination of the rearward facing surface 64 to be substantially similar to the angle of inclination of the forward facing surface 62 for reasons as outlined previously with regard to the first flange 50.

The first and second flanges 50, 60 may be cast integral to the track plate 30 at the point of manufacture, or, alternatively, the first and second flanges 50, 60 may be welded to the track plate 30.

The fastening device 40 to secure the track plate 30 to the mounting portion 20 includes a wedge member 42. The wedge member 42 is arranged to be received in a friction fit in a gap formed between the mounting portion 20 and the track plate 30.

The wedge member 42 is secured in the wedged position by a threaded bolt 44. The wedge member 42 is movable between a wedged position and a non-wedged position. In the embodiment shown in the figures, the wedge member 42 is received in a friction fit between the second flange 60 of the track plate 30 and the leading side 25 of the mounting portion 20. However, it will be appreciated that in an alternative embodiment, the wedge member 42 could be received in a friction fit between the first flange 50 of the track plate 30 and the rearward side 27 of the mounting portion 20. The threaded bolt 44 is received in the corresponding threaded bore of respective upright lugs 24. The threaded bolt 44 is secured in the threaded bore of the upright lugs 24 by a lock nut which prevents vibration, thus preventing the bolt 44 loosening during operation of the undercarriage.

In use, the threaded bolt 44 is threaded in each of the threaded bores of the lugs 24 on opposing sides of the mounting portion 20. The leading edge of the threaded bolt 44 engages the wedge member 42 and applies downward pressure onto the wedge member 42 to secure the wedge member 42 in a friction fit between the mounting portion 20 and the track plate 30. In this way, the track plate 30 is also secured to the mounting portion 20.

The track plate 30 cannot be removed from the mounting portion 20, unless the threaded bolts 44 are unscrewed from the lugs 24, thereby allowing the wedge members 42 to be disengaged from the mounting portion 20 and the track plate 30. The track plate 30 can then be readily released from the mounting portion 20, and thence the track assembly, by downwardly pivoting the leading side 35 of the track plate 30 then disengaging the first flange 50 from the mounting portion 20.

From the above description of the preferred embodiment of the track chain assembly in accordance with the invention, it will be evident that the invention has significant advantages compared to the prior art track chain assemblies, including the following advantages:
(1) Individual track plates can be readily removed, repaired and/or replaced without a labour intensive procedure and the use of specialised tooling.
(2) There is no longer a need to remove the entire track chain assembly to effect repairs, service or maintenance for track plates.
(3) No bolts are exposed to wear on any ground-engaging surfaces and thus there is a reduction in capital expenditure as there is no longer a requirement to dispose and replace worn bolts when the track plate is removed, repaired and/or replaced.

Numerous variations and modifications will suggest themselves to persons skilled in the relevant art, in addition to those already described, without departing from the basic inventive concepts. All such variations and modifications are to be considered within the scope of the present invention, the nature of which is to be determined from the claims.

For example, the mounting portion 20 and the track plate 30 may be provided with respective concentrically aligned circular apertures centrally disposed therein. It is envisaged that the circular apertures could be about 100 mm in diameter. The purpose of the circular apertures is to prevent debris or dust or mud accumulating on the upper surface 21 of the mounting portion 20.

Alternatively, the mounting portion 20 could comprise a pair of opposing sections, each section being fixed to respective opposing side members 14 of the track link 12. It is envisaged that the sections would also be provided with corresponding upright lugs 24.

## Claims

1. A track link for use with a track chain assembly (10), the track link (12) i s provided with a mounting portion (20), comprising a plate having an upper surface (21) fixed to a ground engaging side (18) of the track link (12), a track plate (30) adapted Lo engage the mounting portion (20), and one or more wedge members (12) to secure the track plate (30) to the mounting portion (20), **characterized in that** the track plate (30) is provided with a rearwardly disposed flange (50) configured in use to engage a rearward side (27) of the mounting portion (20), and with at least one forwardly disposed flange (60) configured in use to engage the wedge member (42).

2. The track link according tc claim 1, wherein the wedge member (42) is movable between a wedged position and a non-wedged position.

3. The track link according to claim 1, wherein the wedge member (42) is received, in use, in a friction fil in a gap between the mounting portion (20) and the track plate (30).

4. The track link according to claim 1, wherein the mounting portion (20) is provided with a pair of upright lugs (24), each upright lug (21) being disposed on respective opposing sides (29) of the mounting portion (20), the lugs (24) being provided with a threaded bore disposed at a downwardly inclined angle in longitudinal alignment with a leading side (25) of the mounting portion (20)

5. The track link according to claim 4, wherein a threaded bolt (44) is removably engaged in the bore of the upright lug (24) disposed on the mounting portion (20).

6. The track link according to claim 5, wherein the wedge member (42) is secured between the mounting portion (20) and the track plate (30) by downward pressure applied thereto by a leading edge of the threaded bolt (44) received in the bore of the upright lugs (24).

7. The track link according to any one of claims 1 to 6, wherein the track plate (30) is provided with a pair of the forwardly disposed flanges (60), each flange (60) being disposed adjacent to respective opposing sides (39) of the track plate (30).

8. The track link according to any one of claims 1 to 7, wherein the rearwardly disposed flanges (50) are forwardly inclined and the or each forwardly disposed flange (60) is rearwardly inclined.

9. The track link according to any one of the preceding claims, wherein the mounting portion (20) is fixed to the ground-engaging side (18) of the track link (12) with a plurality of bolts (22), and the bolLs (22) and their respective bolt heads (22a) are not exposed to wear.

10. The track lint according to claim 9, wherein an upper surface (31) of the track plate (30) is provided with a plurality of recesses (32) configured in a pattern thereon to receive respective correspondingly aligned bolt heads (22a) protruding from the mounting portion (20).

11. The track link according to any one of the preceding claims, wherein the track plate (30) is provided with a pair of upright rebate members (58) to guard against excessive lateral movement of the track plate (30).

12. The track link according to claim 11, wherein each rebate member (58) is disposed on respective opposing sides (34) of the track plate (30), the rebate members (58) being spaced apart at a distance marginally greater than a width of the mounting portion (20).

13. The track link according to claim 12, wherein the rebate members (58) are disposed adjacent to respective opposing sides (29) of the mounting portion (20).

14. A track chain assembly (10) for an undercarriage of a track-type vehicle, the train chain assembly (10) comprising a plurality of track links (12), each track link (12) being interconnected to adjacent track links in an endless loop, wherein one or more track links (12) is as defined in any one of the preceding claims.

## Patentansprüche

1. Ein Raupenglied zur Verwendung mit einer Raupenkettenanordnung (10), wobei das Raupenglied (12) mit einem Montageabschnitt (20) versehen ist, umfassend eine Platte mit einer oberen Oberfläche (21), die an einer Boden-Eingriffsseite (18) des Raupenglieds (12) befestigt ist, eine Raupenplatte (30), ausgebildet, um in den Montageabschnitt (20) einzugreifen, und ein oder mehrere Keilglieder (42) zur Sicherung der Raupenplatte (30) am Montageabschnitt (20), **dadurch gekennzeichnet, dass** die Raupenplatte (30) mit einem an der Rückseite angeordneten Flansch (50) ausgestattet ist, im Gebrauch angeordnet, um in eine hintere Seite (27) des Montageabschnitts (20) einzugreifen, und mit mindestens einem an der Vorderseite angeordneten Flansch (60), der im Gebrauch angeordnet ist, um in das Keilglied (42) einzugreifen.

2. Das Raupenglied gemäß Anspruch 1, worin das Keilglied (42) zwischen einer verkeilten Position und einer nicht verkeilten Position beweglich ist.

3. Das Raupenglied gemäß Anspruch 1, worin das Keilglied (42) im Gebrauch in Reibpassung in einer Lücke zwischen dem Montageabschnitt (20) und der Raupenplatte (30) aufgenommen wird.

4. Das Raupenglied gemäß Anspruch 1, worin der Montageabschnitt (20) mit einem Paar aufrechter Nasen (24) ausgestattet ist, wobei jede aufrechte Nase (24) auf entsprechenden gegenüberliegenden Seiten (29) des Montageabschnitts (20) angeordnet ist, wobei die Nasen (24) mit einer Gewindebohrung versehen sind, die in einem abwärts geneigten Winkel in Längsausrichtung mit einer vorderen Seite (25) des Montageabschnitts (20) angeordnet ist.

5. Das Raupenglied gemäß Anspruch 4, worin ein Gewindebolzen (44) lösbar in die Bohrung der aufrechten Nase (24) eingreift, die auf dem Montageabschnitt (20) angeordnet ist.

6. Das Raupenglied gemäß Anspruch 5, worin das Keilglied (42) zwischen dem Montageabschnitt (20) und der Raupenplatte (30) gesichert wird durch Abwärtsdruck, der darauf von einer Anlaufkante des Gewindebolzens (44), der in die Bohrung der aufrechten Nasen (24) aufgenommen ist, ausgeübt wird.

7. Das Raupenglied gemäß einem beliebigen der Ansprüche 1 bis 6, worin die Raupenplatte (30) mit einem Paar der vorwärts angeordneten Flansche (60) ausgestattet ist, wobei jeder Flansch (60) angrenzend an entsprechende gegenuberliegende Seiten (39) der Raupenplatte (30) angeordnet ist.

8. Das Raupenglied gemäß einem beliebigen der Ansprüche 1 bis 7, worin die an der Rückseite angeordneten Flansche (50) vorwärts geneigt sind und der oder jeder an der Vorderseite angeordnete Flansch (60) rückwärts geneigt ist.

9. Das Raupenglied gemäß einem beliebigen der obigen Ansprüche, worin der Montageabschnitt (20) an der Büden-Eingriffsseite (18) des Raupenglieds (12) mit einer Vielzahl von Bolzen (22) befestigt ist und die Bolzen (22) und ihre jeweiligen Bolzenköpfe (22a) nicht dem Verschleiß ausgesetzt sind.

10. Das Raupenglied gemäß Anspruch 9, worin eine obere Oberfläche (31) der Raupenplatte (30) mit einer Vielzahl von Vertiefungen (32) versehen ist, die in einem Muster darauf angeordnet sind, um jeweilige entsprechend ausgerichtete Bolzenköpfe (22a) aufzunehmen, die aus dem Montageabschnitt (20) herausragen.

11. Das Raupenglied gemäß einem beliebigen der obigen Ansprüche, worin die Raupenplatte (30) mit einem Paar aufrechter Falzglieder (58) zum Schutz vor exzessiver seitlicher Bewegung der Raupenplatte (30) ausgestattet ist.

12. Das Raupenglied gemäß Anspruch 11, worin jedes Falzglied (58) auf jeweiligen gegenüberliegenden Seiten (34) der Raupenplatte (30) angebracht ist, wobei die Falzglieder (58) in einem Abstand voneinander beabstandet sind, der marginal größer ist als eine Breite des Montageabschnitts (20).

13. Das Raupenglied gemäß Anspruch 12, worin die Falzglieder (58) angrenzend an jeweilige gegenuberliegende Seiten (29) des Montageabschnitts (20) angebracht sind,

14. Eine Raupenkettenanordnung (10) für ein Untergestell eines Fahrzeugs des Raupentyps, wobei die Raupenkettenanordnung (10) eine Vielzahl von Raupangliedern (12) umfasst und jedes Raupenglied (12) in einer Endlosschleife mit benachbarten Raupengliedern verbunden ist, worin ein oder mehrere Raupenglieder (12) wie in irgendeinem der obigen Ansprüche definiert sind.

## Revendications

1. Patin de chenille, pour utilisation avec un ensemble chaîne à chenille (10), le patin de chenille (12) étant muni d'une partie de montage (20), comprenant une plaque ayant une surface supérieure (21) fixée à un côté de mise en contact avec le sol (18) du patin de chenille (12), une plaque de chenille (30), adaptée pour venir en prise avec la partie de montage (20), et un ou plusieurs organes formant coins (42), pour fixer la plaque de chenille (30) à la partie de montage (20), **caractérisé en ce que** la plaque de chenille (30) est munie d'une bride disposée à l'arrière (50), configurée, en utilisation, pour venir en prise avec un côté arrière (27) de la partie de montage (20), et avec au moins une bride disposée à l'avant (60), configurée, en utilisation, pour venir en prise avec l'organe formant coin (42).

2. Patin de chenille selon la revendication 1, dans lequel l'organe formant coin (42) est déplaçable entre une position bloquée et une position non bloquée.

3. Patin de chenille selon la revendication 1, dans lequel l'organe formant coin (42) est logé, en utilisation, en un montage à friction, dans un intervalle existant entre la partie de montage (20) et la plaque de chenille (30).

4. Patin de chenille selon la revendication 1, dans lequel la partie de montage (20) est munie d'une paire de pattes montantes (24), chaque patte montante (24) étant disposée sur des côtés opposés (29) respectifs de la partie de montage (20), les pattes (24) étant munies d'un trou taraudé, disposé sous un angle incliné vers le bas, en alignement longitudinal avec un côté avant (25) de la partie de montage (20).

5. Patin de chenille selon la revendication 4, dans lequel un boulon fileté (44) est mis en prise, de manière désolidarisable, dans le trou de la patte montante (24) disposée sur la partie de montage (20).

6. Patin de chenille selon la revendication 5, dans lequel l'organe formant coin (42) est fixé entre la partie de montage (20) et la plaque de chenille (30), par une pression orientée vers le bas, appliquée sur lui par un bord avant du boulon fileté (44) logé dans le trou des pattes montantes (24).

7. Patin de chenille selon l'une quelconque des revendications 1 à 6, dans lequel la plaque de chenille (30) est munie d'une paire de brides (60) disposées à l'avant, chaque bride (60) étant disposée de manière adjacente à des côtés opposés (39) respectifs de la plaque de chenille (30).

8. Patin de chenille selon l'une quelconque des revendications 1 à 7, dans lequel les brides (50) disposées à l'avant sont inclinées vers l'avant et le ou chaque bride (60) disposée à l'avant est inclinée vers l'arrière.

9. Patin de chenille selon l'une quelconque des revendications précédentes, dans lequel la partie de montage (20) est fixée, à l'aide d'une pluralité de boulons (22), au côté de mise en contact avec le sol (18) du patin de chenille (12), et les boulons (22) et leurs têtes de boulon (22a) respectives ne sont pas exposées à l'usure.

10. Patin de chenille selon la revendication 9, dans lequel une surface supérieure (31) de la plaque de chenille (30) est munie d'une pluralité de cavités (32), configurées selon un motif sur elle pour recevoir des têtes de boulon (22a) alignées de manière correspondante respectives, faisant saillie de la partie de montage (20).

11. Patin de chenille selon l'une quelconque des revendications précédentes, dans lequel la plaque de chenille (30) est munie d'une paire d'organes de feuillure (58) montants, pour protéger contre tout déplacement latéral excessif de la plaque de chenille (30).

12. Patin de chenille selon la revendication 11, dans lequel chaque organe de feuillure (58) est disposé sur des côtés opposés (34) respectifs de la plaque de chenille (30), les organes de feuillure (58) étant espacés mutuellement d'une distance marginalement plus grande qu'une largeur de la partie de montage (20).

13. Patin de chenille selon la revendication 12, dans lequel les organes de feuillure (58) sont disposés de manière adjacente à des côtés opposés (29) respectifs de la partie de montage (20).

14. Ensemble patin de chenille (10) pour un train d'un véhicule de type à chenille, l'ensemble patin de chenille (10) comprenant une pluralité de patins de chenille (12), chaque patin de chenille (12) étant interconnecté à des patins de chenille adjacents en une boucle sans fin, dans lequel un ou plusieurs patins de chenille (12) est tel que défini selon l'une quelconque des revendications précédentes.
